# EUROPÄISCHE PATENTANMELDUNG

(11) **EP 4 277 096 A1**
(43) Veröffentlichungstag der Anmeldung: **15.11.2023**
(21) Anmeldenummer: 22173360.3
(22) Anmeldetag: 13.05.2022
(51) Int. Cl.: H02K 15/00, H02K 17/16

(54) **ROTOR EINES KÄFIGLÄUFER-MOTORS UND VERFAHREN ZU SEINER HERSTELLUNG**

(71) Anmelder: Siemens Aktiengesellschaft, 80333 München (DE)
(72) Erfinder: Krompasky, Erik, 25216 Nucice (CZ)
(74) Vertreter: Siemens Patent Attorneys

(57) **Zusammenfassung**

Die Erfindung betrifft einen Rotor eines Käfigläufer-Motors und ein Verfahren zu seiner Herstellung, wobei der Rotor einen Kurzschlusskäfig aufweist, und sich Läuferstäbe (2) des Kurzschlusskäfigs in Axialrichtung durch einen zylindrischen Läuferkörper (1) erstrecken und jeweils durch Kurzschlussringe (7) an Stirnflächen (4) des Läuferkörpers miteinander verbunden sind, und wobei die Kurzschlussringe (7) mittels additivem Fertigungsverfahren direkt auf die Stirnseiten (4) des zylindrischen Läuferkörpers (1) aufgebracht sind.

## Beschreibung

Die Erfindung betrifft einen Rotor eines Käfigläufer-Motors sowie ein Verfahren zu seiner Herstellung.

Bei Asynchronmaschinen wird meist in einem Rotor, der relativ zu einem Stator drehbar gelagert ist, ein sogenannter Kurzschlusskäfig vorgesehen. Der Rotor der Asynchronmaschine wird daher auch als Käfigläufer oder Kurzschlussläufer bezeichnet. Der Kurzschlusskäfig weist Kurzschlussstäbe auf, die im Allgemeinen parallel oder leicht schräg zu der Rotationsachse des Käfigläufers, d.h. in Axialrichtung verlaufend angeordnet sind.

Die Kurzschlussstäbe sind in den Rotorgrundkörper eingefügt, der meist als Lamellenpaket aus einer Vielzahl von axial nebeneinander gestapelten Blechlamellen gebildet wird.

Die Kurzschlussstäbe sind in Ausnehmungen oder Nuten in das Lamellenpaket eingelegt. An ihren Enden sind die Kurzschlussstäbe durch Kurzschlussringe, welche an beiden stirnseitigen Enden des Rotorgrundkörpers angeordnet sind, elektrisch miteinander verbunden.

Ein Beispiel eines Kurzschlussläufers einer Asynchronmaschine wird in DE 195 42 962 C1 beschrieben.

Während des Betriebs der elektrischen Maschine werden in dem Kurzschlusskäfig aufgrund variierender Magnetfelder starke Ströme induziert. Um dabei die Widerstandsverluste gering zu halten, besteht der Kurzschlusskäfig im Allgemeinen aus einem Material mit hoher elektrischer Leitfähigkeit wie beispielsweise aus Kupfer, Aluminium oder einer Legierung mit diesen Stoffen.

Allerdings weisen die genannten Materialien eine verhältnismäßig geringe mechanische Festigkeit auf.

Wenn der Rotor auf hohe Drehzahlen beschleunigt wird, neigen daher die Komponenten des Kurzschlusskäfigs, insbesondere die freiliegenden Kurzschlussringe dazu, sich aufgrund von Fliehkräften zu verformen. Eine Verringerung der Festigkeit der Komponenten, wie sie bei den im Betrieb häufig vorkommenden hohen Temperaturen auftreten kann, verstärkt die Deformationstendenzen zusätzlich.

In der DE 102014220267 A1 wird daher vorgeschlagen, die mechanisch wenig stabilen Kurzschlussringe des Kurzschlusskäfigs gegen radiale Deformation beispielsweise aufgrund bei hohen Drehzahlen auftretender starker Fliehkräfte mittels Stützscheiben zu schützen, welche ähnlich wie eine Decklamelle an einer Stirnfläche des Lamellenpakets angeordnet werden können und welche mit einem axial weg von dem Lamellenpaket umgebogenen randnahen Bereich den Kurzschlussring stabilisieren können.

Aus der EP 3 823 142 A1 ist ein Kurzschlussläufer bekannt, bei dem zur Aufnahme der Fliehkräfte radial innerhalb der Kurzschlussringe, ein Stützelement aus hochfestem Material befindet, das mit dem Kurzschlussring zumindest abschnittsweise stoffschlüssig verbunden ist.

Um Deformationen der Kurzschlussringe zu vermeiden, werden diese herkömmlich auch durch von außen umgreifende Bandagen gestützt.

Die genannten Maßnahmen erhöhen Kosten und Komplexität der Asynchronmaschine.

Der Erfindung liegt daher die Aufgabe zugrunde, einen Rotor eines Käfigläufer-Motors anzugeben, der für hohe Drehzahlen geeignet und einfach herzustellen ist.

Erfindungsgemäß geschieht dies mit einem Rotor gemäß Anspruch 1 und einem Verfahren gemäß Anspruch 7.

Vorteilhafte Ausgestaltungen der Erfindung ergeben sich aus den Unteransprüchen.

Die Erfindung wird anhand von Figuren näher erläutert. Es zeigen beispielhaft:
Fig. 1, 2, 3 und 4 unterschiedliche Ausführungsformen eines erfindungsgemäßen Rotors,
Fig. 5, 6 und 7 weitere Ausführungsformen mit einem Rotor mit laminarem Aufbau.

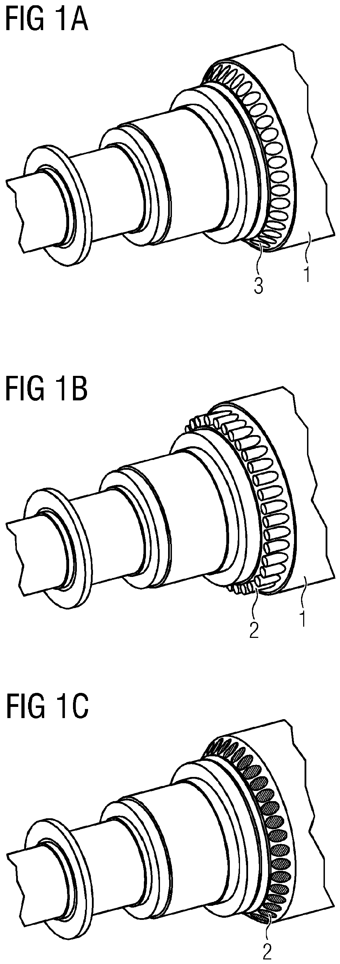

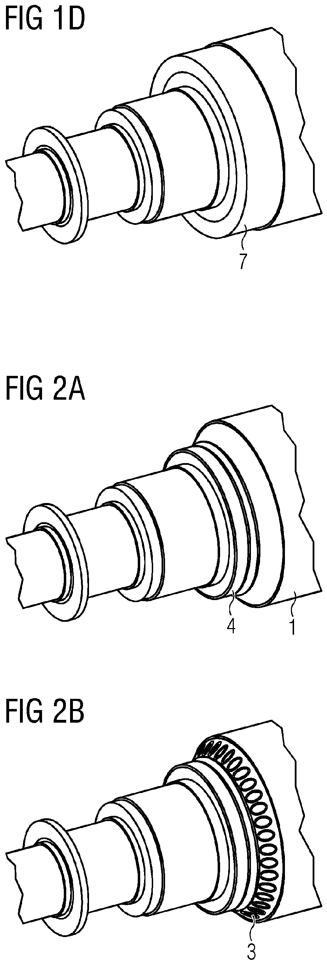

Fig. 1 zeigt 4 Ansichten eines erfindungsgemäßen Rotors in unterschiedlichen Phasen des Herstellungsprozesses, Fig. 1 a zeigt den zylindrischen Läuferkörper 1 vor der Bestückung mit den Kurzschlussstäben 2 mit den zur Aufnahme der Läuferstäbe 2 vorgesehenen, noch offenen Bohrungen in einem - beim Ausführungsbeispiel konisch verlaufenden - Abschnitt der Stirnfläche, diese Stirnfläche kann jedoch ohne Einschränkung der Erfindung auch einen anderen Verlauf aufweisen.

Fig. 1 b zeigt den Rotor mit bereits eingefügten Kurzschlussstäben, Fig. 1c den Rotor mit bearbeiteten Läuferstäben, sodass sie einen bündigen Abschluss mit dem konisch verlaufenden äußeren Abschnitt der Rotorstirnseite bilden.

Fig. 1 d zeigt dann den fertigen Rotor mit dem Kurzschlussring, der mit einem additiven Fertigungsverfahren (3D -Druck) wie vorzugsweise der Methode des "wire feed electron beam additive manufacturing" auf den Rotorkörper aufgebracht wurde.

Alternativ wäre aber auch beispielsweise das "cold spray additive manufacturing", die Methode des "Wire/powder feed Laser metal deposition", das "Friction deposition additive manufacturing", das "Rotary friction welding" oder das "Ultrasonic additive manufacturing" für den Aufbringungsvorgang anwendbar.

Durch die genannten Verfahren wird eine stabile Bindung zwischen dem Kurzschlussring, der beispielsweise aus Kupfer, Aluminium oder geeigneten Legierungen bestehen kann, und dem Rotorkörper z.B. aus Stahl erzielt. Durch diese stabile Bindung wird die Widerstandskraft des Kurzschlussring gegenüber Fliehkräften deutlich erhöht und der Einsatz des Rotors für höhere Drehzahlen bei nur geringem Material- und Fertigungsaufwand ermöglicht.

Die genannte additive Methoden sind mit weiteren Fertigungsverfahren kombinierbar, wie beispielsweise "Galvanisierung", "Tampongalvanisierung", "Elektronstrahlschweißen", "Läserstrahlaschweißen", "Lötprozesse" oder "Sprengplatierung", um eine dauerhaftige Verbindung zwischen verschiedenen Werkstoffe herzustellen.

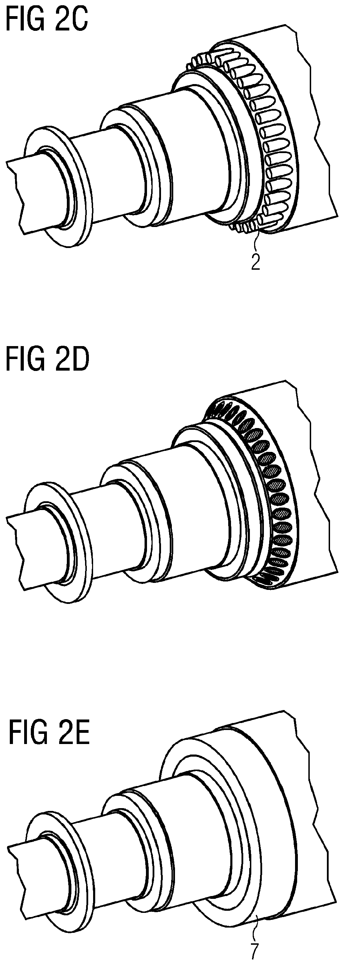

Fig. 2 zeigt die unterschiedlichen Phasen der Herstellung eines weiteren erfindungsgemäßen Rotors wobei wie in Fig. 2a dargestellt in einem ersten Schritt auf die Stirnseite des Rotors mit einem additiven Fertigungsverfahren, oder auch mittels galvanischer Beschichtung, oder Sprengplatierung eine dünne Kupferschicht oder eine gewünschte Materialkombination aufgebracht wird, danach die Bohrungen für die Läuferstäbe Fig.2b, die Einfügung der Läuferstäbe Fig.2c, der bündige Abschluss 2d und die Aufbringung des Kurschlussrings 7 Fig. 2e erfolgt.

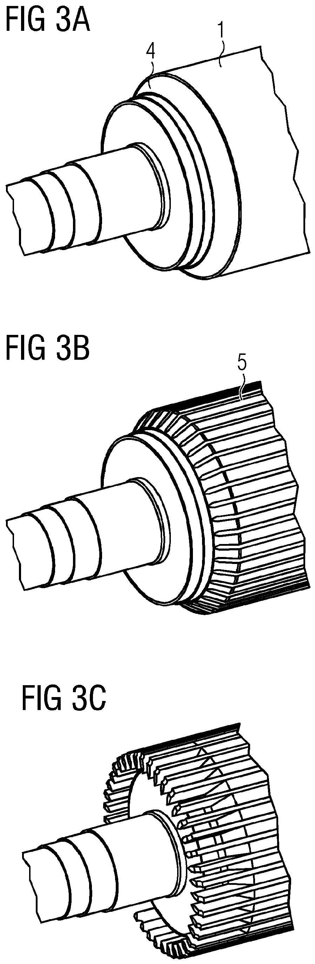

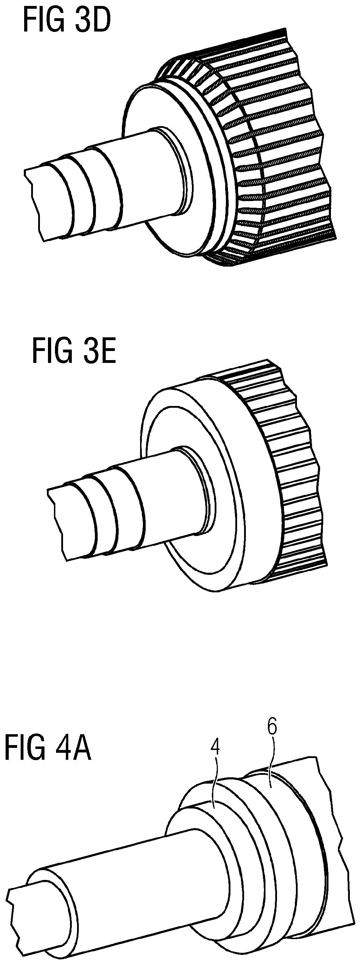

Fig. 3 zeigt ein weiteres Ausführungsbeispiel, bei dem die Läuferstäbe 2 stabförmig ausgeführt und in Nuten 5 des Rotors 1 eingefügt sind. Auch bei diesem Ausführungsbeispiel wird in einem ersten Schritt eine dünne Kupferschicht oder eine gewünschte Materialkombination auf die Stirnseite des Rotors 1 aufgebracht Fig.3a, dies allerdings nur dann, wenn das additive Fertigungsverfahren für einen direkten Aufbringungsvorgang auf die Welle/Läuferstab nicht geeignet ist, danach werden die Nuten 5 zur Aufnahme der Läuferstäbe 2 gefräst Fig.3b, die Läuferstäbe 2 eingefügt Fig. 3c und bündig gekürzt Fig. 3d und der eigentliche Kurzschlussring 7 aufgebracht.

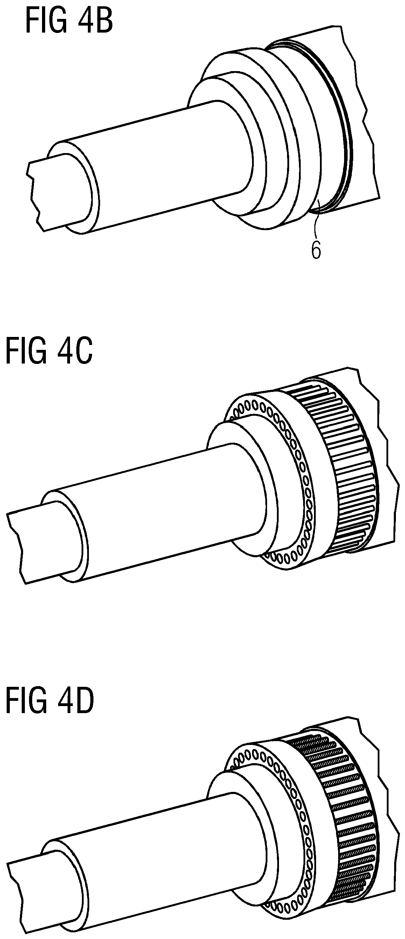

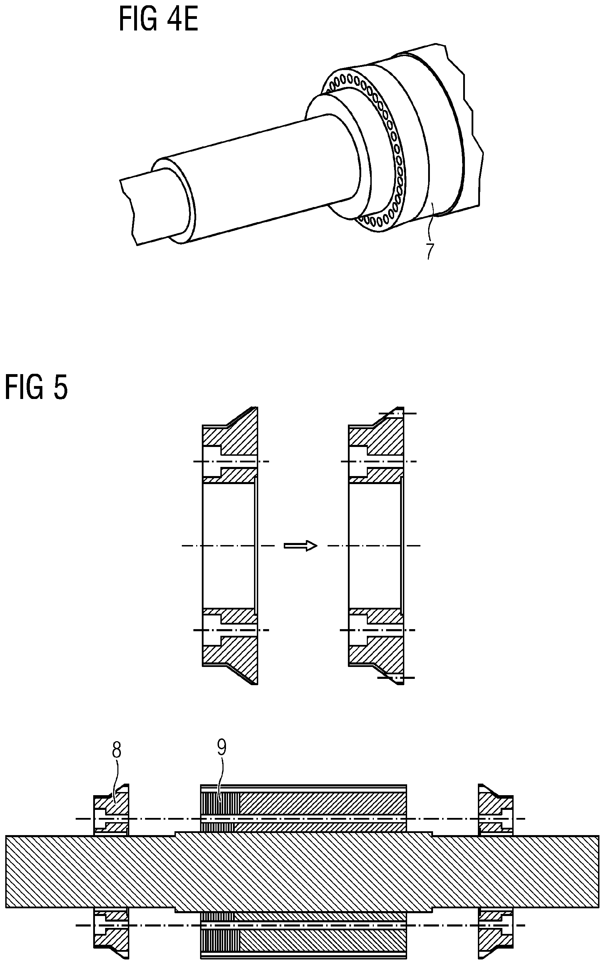

Fig.4 zeigt ein weiteres Ausführungsbeispiel, bei dem im Unterschied zu den vorangehenden Beispielen der Kurzschlussring 7 nicht direkt auf die Stirnseite des Rotors aufgebracht wird, sondern etwas von der Stirnseite beabstandet in einer umlaufenden Nut 6 des Rotors eingefügt ist. Die Vorgehensweise bei der Herstellung des Rotors 1 entspricht jedoch weitgehend der Vorgehensweise bei den anderen Beispielen.

Fig. 5, 6 und 7 zeigen jeweils Ausführungsbeispiele mit einem Läuferkörper 1, der als Lamellenpaket aus einer Vielzahl von axial nebeneinander gestapelten Blechlamellen 9 aufgebaut ist. An den Stirnseiten wird das Lamellenpaket von Stahlringen 8 abgeschlossen, auf welche die Kurzschlussringe 7 aufgebracht werden. Es ist darauf hinzuweisen, dass die Erfindung in gleicher Weise auch bei einem massiven Läuferkörper aus Stahl angewendet werden kann.

Beim Ausführungsbeispiel nach Fig. 5 weisen die Stahlringe 8 einen beispielsweise konisch verlaufenden Abschnitt der Stirnfläche auf, die Kurzschlussringe sind dermaßen gestaltet, dass sie zusammen mit dem Läufergrundkörper einen Zylinder mit einer einheitlich normal zur Drehachse verlaufenden Stirnseite bilden.

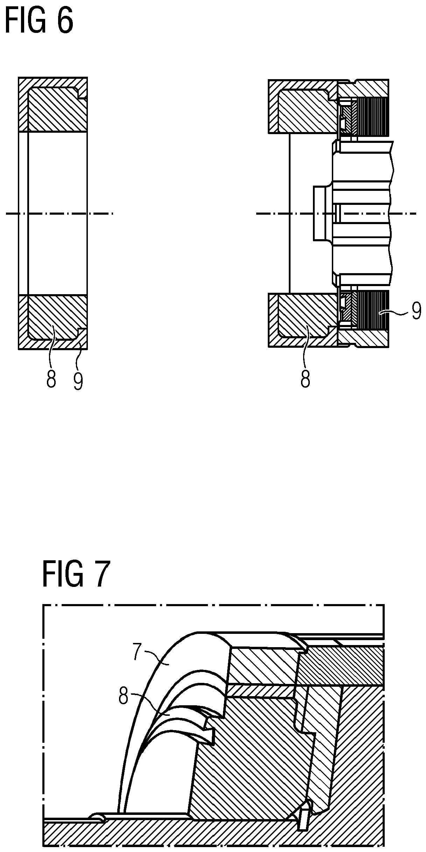

Bei den Ausführungsbeispielen nach Fig. 6 und 7 weisen die Stahlringe 8 einen geringeren Umfang als der Läuferkörper auf, die Kurzschlussringe 7 werden auf dem Umfang der Stahlringe 8 in der Art und Weise aufgebracht, dass nach dem Aufbringen mit dem Läufergrundkörper ein Zylinder mit einer einheitlichen Mantelfläche gebildet wird.

**Bezugszeichenliste**

| | |
|---|---|
| Läuferkörper | 1 |
| Läuferstäbe | 2 |
| Bohrungen | 3 |
| Stirnseite des Läuferkörpers | 4 |
| Nuten | 5 |
| Umlaufende Nut | 6 |
| Kurzschlussring | 7 |
| Stahlring | 8 |
| Blechlamellen | 9 |
| Rotorschaft | 10 |

## Patentansprüche

1. Rotor eines Käfigläufer-Motors mit einem Kurzschlusskäfig, wobei sich Läuferstäbe (2) des Kurzschlusskäfigs in Axialrichtung durch einen zylindrischen Läuferkörper (1) erstrecken und jeweils durch Kurzschlussringe (7) an oder nahe der Stirnflächen des Läuferkörpers (4) miteinander verbunden sind, **dadurch gekennzeichnet, dass** die Kurzschlussringe (7) mittels additivem Fertigungsverfahren direkt auf die Stirnseiten (4) des zylindrischen Läuferkörpers aufgebracht sind.

2. Rotor nach Anspruch 1, **dadurch gekennzeichnet, dass** als additives Fertigungsverfahren die Methode des "wire feed electron beam additive manufacturing" vorgesehen ist.

3. Rotor nach Anspruch 1, **dadurch gekennzeichnet, dass** als additives Fertigungsverfahren die Methode des "cold spray additive manufacturing" vorgesehen ist.

4. Rotor nach Anspruch 1, **dadurch gekennzeichnet, dass** als additives Fertigungsverfahren die Methode des "Wire/powder feed Laser metal deposition" vorgesehen ist.

5. Rotor nach Anspruch 1, **dadurch gekennzeichnet, dass** als additives Fertigungsverfahren die Methode des "Friction deposition additive manufacturing" oder das "Rotary friction welding" vorgesehen sind.

6. Rotor nach Anspruch 1, **dadurch gekennzeichnet, dass** als additives Fertigungsverfahren die Methode des "Ultrasonic additive manufacturing" vorgesehen sind.

7. Rotor nach Anspruch 1, **dadurch gekennzeichnet, dass** die additives Fertigungsverfahren laut Ansprüche 2 bis 6 auch mit Galvanisierung, Sprengplatierung, Elektronstrahlschweißen, Laserstrahlschweißen oder Lötprozesse kombinierbar sind.

8. Rotor nach einem der Ansprüche 1 bis 7, **dadurch gekennzeichnet**, das als Material für die Kurzschlussringe (7) Kupfer oder Kupferlegierungen vorgesehen sind.

9. Rotor nach einem der Ansprüche 1 bis 7, **dadurch gekennzeichnet**, das als Material für die Kurzschlussringe (7) Aluminium vorgesehen ist.

10. Rotor nach einem der Ansprüche 1 bis 7, **dadurch gekennzeichnet, dass** der zylindrische Läuferkörper (1) ein Lamellenpaket aus einer Vielzahl von in Axialrichtung nebeneinander gestapelten Blechlamellen (9) aufweist.

11. Verfahren zur Herstellung des Rotors eines Käfigläufer-Motors, bei dem in einen Rotorkörper Läuferstäbe (2) des Kurzschlusskäfigs in vorbereitete Ausnehmungen (3) des zylindrischen Läuferkörpers (1) eingefügt werden, **dadurch gekennzeichnet**, mittels additivem Fertigungsverfahren Kurzschlussringe(7) direkt auf oder nahe der Stirnseiten (4) des zylindrischen Läuferkörpers (1)aufgebracht werden.
